# EUROPÄISCHE PATENTSCHRIFT

(11) **EP 1 338 831 B1**
(45) Veröffentlichungstag und Bekanntmachung des Hinweises auf die Patenterteilung: **21.11.2012**
(21) Anmeldenummer: 03000718.1
(22) Anmeldetag: 13.01.2003
(51) Int. Cl.: F16H 59/02

(54) **Getriebeschalteinrichtung**
Transmission gear shifting device
Dispositif de changement de vitesse pour transmission

(30) Priorität: 20.02.2002 DE 10206985
(43) Veröffentlichungstag der Anmeldung: 27.08.2003
(73) Patentinhaber: Bayerische Motoren Werke Aktiengesellschaft, 80809 München (DE)
(72) Erfinder: Neuner, Josef, 83064 Raubling (DE); Wöste, Norbert, 80939 München (DE); Ehrmaier, Rudolf, 81927 München (DE)

(56) Entgegenhaltungen:
- WO-A1-03/031845
- DE-A1- 10 059 277
- DE-A1- 19 714 495
- DE-A1- 19 916 924
- FR-A1- 2 807 716

## Beschreibung

Die vorliegende Erfindung betrifft eine Schalteinrichtung gemäß dem Oberbegriff des Patentanspruches 1.

Eine derartige Schaltvorrichtung ist aus der älteren, nicht vorveröffentlichten WO 03/031845 A1 bekannt. Zu relevanten Stand der Technik zählen ferner die DE 197 14 495 A1 sowie die FR 2 807 716 A1.

Moderne Pkw-Automatikgetriebe und sog. "Automatisierte Handschaltgetriebe" weisen häufig eine sog. "Zweigassenschaltung" auf, d.h. sie sind wahlweise in einem Automatikmodus betreibbar oder über eine sogenannte Tippschaltung manuell schaltbar.

Aus der DE 199 38 528 A1 ist ein Automatikgetriebe mit einer Zweigassenschaltung bekannt. Der Schalthebel ist mechanisch über ein Gestänge bzw. einen Seilzug mit dem Getriebe verbunden und wahlweise in einer linken bzw. rechten Schaltgasse bewegbar. Über die linke Schaltgasse sind die einzelnen Betriebszustände eines herkömmlichen Automatikgetriebes anwählbar, nämlich der Parkzustand, Rückfahrzustand, Neutralzustand und Fahrzustand, in dem einzelne Vorwärtsgänge automatisch durch eine Getriebesteuerung geschaltet werden. Vom Fahrzustand aus kann der Schalthebel in die "rechte Schaltgasse" bewegt werden, in der ein manuelles Schalten möglich ist, was im folgenden als "Schrittschaltzustand" bezeichnet wird. Der Schalthebel weist in der rechten Schaltgasse eine stabile Mittelstellung auf und kann wahlweise nach vorne gedrückt bzw. nach hinten "getippt" werden, was ein manuelles Hoch- bzw. Herunterschalten ermöglicht.

Aufgabe der Erfindung ist es, eine Schalteinrichtung für ein Automatikgetriebe zu schaffen, die hinsichtlich ihrer Schaltergonomie verbessert ist und die insbesondere den Anforderungen sportlicher Fahrzeuge besser gerecht wird und bei der eine Fehlbedienung ausgeschlossen ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer "monostabilen Schaltung", bei der zwei Schaltgassen vorgesehen sind. "Monostabil" bedeutet, dass das Schaltelement bzw. der Schalthebel nur eine einzige stabile Stellung hat. In Abhängigkeit vom aktuellen "Betriebszustand" der Schalteinrichtung können durch Auslenken des Schalthebels bestimmte andere Betriebszustände angewählt werden. Der Schalthebel wird hierzu von Hand entweder in der einen oder in der anderen Schaltgasse ausgelenkt und kehrt nach dem Loslassen aus jeder möglichen Auslenkstellung selbsttätig in die stabile Ausgangsstellung zurück.

Vorzugsweise sind zwei nebeneinander liegende parallele Schaltgassen vorgesehen. In seiner stabilen Stellung befindet sich das Schaltelement bzw. der Schalthebel in einer der beiden Schaltgassen, die hier zur Unterscheidung als "erste Schaltgasse" bezeichnet wird. Der Schalthebel kann in der ersten Schaltgasse angetippt werden, das heißt nach vorne bzw. hinten verschwenkt werden. Der Schalthebel kann ferner aus der stabilen Stellung quer zu den Schaltgassen in eine Mittelstellung der anderen Schaltgasse bewegt werden, die hier als zweite Schaltgasse bezeichnet wird.

Aus der Mittelstellung in der zweiten Schaltgasse kann der Schalthebel entweder nach vorne in eine vordere Neutralstellung oder noch weiter in eine vordere Endstellung bewegt werden oder nach hinten in eine hintere Neutralstellung bzw. noch weiter in eine hintere Endstellung.

Es wird ausdrücklich darauf hingewiesen, dass die Begriffe "vorne" bzw. "hinten" sowie "links" bzw. "rechts" in der folgenden Beschreibung und in den Patentansprüchen nicht unbedingt räumlich zu verstehen sind und keinesfalls einschränkend. Diese Begriffe wurden lediglich zur anschaulichen Unterscheidung der einzelnen Stellungen gewählt.

In Abhängigkeit vom aktuellen Betriebszustand der Schalteinrichtung können über den Schalthebel in der zweiten Schaltgase der Rückfahrzustand, Neutralzustand bzw. Fahrzustand angewählt werden. Die rechte Schaltgasse ist für den Schrittschaltzustand vorgesehen. Das Anwählen einzelner Fahrbetriebszustände wird im Zusammenhang mit der Zeichnung noch näher erläutert.

Nach einer Weiterbildung der Erfindung wird der Rückfahrzustand durch eine Bewegung des Schalthebels nach "vorne links" angewählt, wie dies bei vielen herkömmlichen Handschaltgetrieben der Fall ist. Das heißt, zum Anwählen des Rückfahrzustands wird der Schalthebel aus der stabilen Stellung nach links in die zweite Schaltgasse bewegt und von dort nach vorne seine vordere Endstellung. Ein Fahrer, der ein herkömmliches Schaltgetriebe gewohnt ist, braucht sich somit zum Anwählen des Rückfahrzustandes nicht umzustellen.

Zum Anwählen des Fahrzustandes, das heißt des "Automatikmodus", in dem die einzelnen Vorwärtsgänge des Getriebes automatisch durch eine Getriebesteuerung geschaltet werden, muss der Schalthebel nach "hinten links" bewegt werden. Das heißt, der Schalthebel muss aus seiner stabilen Mittelstellung zunächst quer in die zweite Schaltgasse und dort in seine hintere Endstellung bewegt werden.

Zum Anwählen des Neutralzustandes muss der Schalthebel in Abhängigkeit von dem aktuellen Betriebszustand in die vordere Neutralstellung, die zwischen der Mittelstellung und der vorderen Endstellung in der zweiten Schaltgasse liegt oder in die hintere Neutralstellung, die zwischen der Mittelstellung und der hinteren Endstellung in der zweiten Schaltgasse liegt. Wenn sich die Schalteinrichtung im Rückfahrzustand befindet, muss das Schaltelement hierzu in die hintere Neutralstellung bewegt werden. Befindet sich die Schalteinrichtung hingegen im Fahrzustand, so muss zum Anwählen des Neutralzustandes das Schaltelement in die vordere Neutralstellung bewegt werden.

Nach einer Weiterbildung der Erfindung ist vorgesehen, dass automatisch in den Neutralzustand geschaltet wird, wenn sich die Schalteinrichtung im Rückfahrzustand befindet und das Schaltelement in Längsrichtung der ersten Schaltgasse bewegt wird.

Nach einer Weiterbildung der Erfindung ist vorgesehen, dass der Schrittschaltzustand nur dann angewählt werden kann, wenn sich die Schalteinrichtung im Fahrzustand befindet. Das heißt, dass aus dem Rückfahrzustand bzw. dem Neutralzustand nicht unmittelbar in den Schrittschaltzustand geschaltet werden kann, wodurch sich die Fahrsicherheit erhöht.

Wenn sich die Schalteinrichtung im Fahrzustand befindet, kann sehr einfach und komfortabel in den Schrittschaltzustand umgeschaltet werden. Hierzu braucht das Schaltelement bzw. der Schalthebel lediglich in Längsrichtung der ersten Schaltgasse aus seiner stabilen Stellung ausgelenkt werden, das heißt der Schalthebel braucht lediglich kurz angetippt werden.

Befindet sich die Schalteinrichtung im Fahrzustand und wird der Schalthebel in der ersten Schaltgasse angetippt, so wird in den Schrittschaltzustand umgeschaltet. Der Schrittschaltzustand kann auch als "M-Programm" (Manuelles Schaltprogramm) bezeichnet werden. Beim "erstmaligen Antippen" aus dem Fahrzustand heraus kann vorgesehen sein, dass der momentane Gang gehalten wird. Wenn sich die Schalteinrichtung im Schrittschaltzustand befindet und der Schalthebel aus seiner stabilen Stellung nach vorne oder hinten ausgelenkt wird, so wird "manuell" Hoch- bzw. Heruntergeschaltet, d.h. die Gänge werden nur dann geschaltet, wenn der Fahrer den Schalthebel in der ersten Schaltgasse betätigt.

Ferner kann ein Sportprogramm (S-Programm) vorgesehen sein. Aus dem Fahrzustand heraus kann beispielsweise durch Betätigen eines "S/D-Tasters" in das S-Programm geschaltet werden. Es kann aber auch vorgesehen sein, dass aus dem Fahrzustand heraus durch einmaliges Antippen des Schalthebels in der ersten Schaltgasse in das S-Programm geschaltet wird. Das S-Programm ist ein "zweiter Automatikmodus", der sich hinsichtlich seiner Schaltcharakteristik vom Automatikmodus des Fahrzustandes unterscheidet. Er kann beispielsweise als "Sportprogramm" ausgelegt sein, in dem die einzelnen Gänge höher ausgedreht werden. Vom S-Programm kann durch Bewegen des Schalthebels in der ersten Schaltgasse manuell hoch- bzw. runtergeschaltet werden.

Es wurde bereits erwähnt, dass eventuell aus Sicherheitsgründen vorgesehen sein kann, dass der Schrittschaltzustand bzw. das S-Programm nur dann angewählt werden können, wenn sich die Schalteinrichtung aktuell im Fahrzustand befindet. Hierzu ist eine "Überwachungseinrichtung" vorgesehen. Die Überwachungseinrichtung kann eine "passive" Sicherheitselektronik sein, die bei einer Längsbewegung des Schaltelements in der ersten Schaltgasse nur dann eine Umschaltung in den Schrittschaltzustand zuläßt, wenn sich die Schalteinrichtung im Fahrzustand befindet. Das heißt, die Überwachungselektronik gestattet zwar in jedem Betriebszustand eine Bewegung des Schaltelements in der ersten Schaltgasse. Ein Umschalten in den Schrittschaltzustand gestattet die Überwachungselektronik aber nur dann, wenn sich die Schalteinrichtung im Fahrzustand befindet.

Alternativ dazu kann auch eine mechanische Sperreinrichtung vorgesehen sein, die eine Längsbewegung des Schaltelements bzw. Schalthebels in der ersten Schaltgasse nur dann gestattet, wenn sich die Schalteinrichtung im Fahrzustand befindet oder wenn bereits der Schrittschaltzustand aktiv ist und der Fahrer manuell hoch- bzw. runterschalten möchte.

Nach einer Weiterbildung der Erfindung ist vorgesehen, dass die Schalteinrichtung aus dem Schrittschaltzustand über zwei verschiedene Auslenkwege des Schaltelements in den Fahrzustand geschaltet werden kann. Wie bereits erwähnt, kann der Fahrzustand einerseits durch ein Bewegen des Schalthebels "nach hinten links", das heißt aus der stabilen Stellung in die zweite Schaltgasse und dort in eine der beiden Endstellungen angewählt werden. Zusätzlich besteht die Möglichkeit, den Fahrzustand durch eine "entgegengesetzte" Querbewegung anzuwählen. Durch eine Querbewegung aus der stabilen Stellung in eine Richtung, die der zweiten Schaltgasse entgegengesetzt gerichtet ist, kann also ebenfalls der Fahrzustand angewählt werden. Befindet sich beispielsweise die zweite Schaltgasse links neben der stabilen Stellung des Schalthebels bzw. links neben der ersten Schaltgasse, so kann der Fahrzustand einerseits durch Bewegen des Schalthebels nach "hinten links" oder durch eine Querbewegung nach rechts angewählt werden. Diese zusätzliche Anwahlmöglichkeit für den Fahrzustand verbessert erheblich den Schaltkomfort, da der Fahrer den Schalthebel lediglich in eine Querrichtung nach rechts antippen muss.

Vorzugsweise kann vorgesehen sein, dass durch den o.g. zusätzlichen "Querfreiheitsgrad" des Schalthebels eine "Umschaltung" zwischen dem Automatikmodus des Fahrzustandes, dem Schrittschaltzustand (M-Programm) und dem Sportprogramm (S-Programm) möglich ist.

Vorzugsweise ist zusätzlich ein "Betätigungselement" zum Anwählen eines Parkzustandes vorgesehen. Das Betätigungselement kann beispielsweise ein elektrischer Taster sein, der in das Schaltelement bzw. den Schalthebel integriert ist. Optional kann ein zweites "Betätigungselement" zum Anwählen des Parkzustandes vorgesehen sein, das beispielsweise mit einer Schalteinrichtung zum "Ein- bzw. Ausschalten" eines Fahrzeugbordnetzes gekoppelt ist. Das zweite Betätigungselement kann beispielsweise durch das Zündschloss oder einen "Aus-Schalter" gebildet sein, so dass die Schalteinrichtung beim Abstellen des Fahrzeugs automatisch in den Parkzustand schaltet.

Die Schaltmöglichkeiten in Abhängigkeit vom aktuellen Betriebszustand lassen sich wie folgt zusammenfassen.
- Im Parkzustand kann durch Auslenken des Schaltelements aus der stabilen Stellung in die vordere bzw. hintere Neutralstellung der Neutralzustand angewählt werden und durch Auslenken in eine der beiden Endstellungen der zweiten Schaltgasse der Fahrzustand bzw. der Rückfahrzustand. Der Schrittschaltzustand kann zumindest bei "echten" Automatikfahrzeugen aus dem Parkzustand heraus nicht unmittelbar angewählt werden.
- Im Rückfahrzustand kann durch Auslenken des Schaltelements aus der stabilen Stellung in die hintere Neutralstellung der zweiten Schaltgasse der Neutralzustand angewählt werden und durch Auslenken in die hintere Endstellung kann der Fahrzustand angewählt werden. Aus dem Rückfahrzustand heraus kann zumindest bei "echten" Automatikfahrzeugen der Schrittschaltzustand ebenfalls nicht angewählt werden.
- Im Neutralzustand kann durch Auslenken des Schaltelements aus der stabilen Stellung in die vordere Endstellung der Rückfahrzustand und in die hintere Endstellung der Fahrzustand angewählt werden. Auch aus dem Neutralzustand heraus kann der Schrittschaltzustand zumindest bei "echten" Automatikfahrzeugen nicht unmittelbar angewählt werden.
- Im Fahrzustand kann durch Auslenken des Schaltelements aus der stabilen Stellung in die vordere Neutralstellung der Neutralzustand angewählt werden und durch Auslenken in die vordere Endstellung kann der Rückfahrzustand angewählt werden. Ferner kann durch Auslenken des Schaltelements aus der stabilen Stellung in Längsrichtung der ersten Schaltgasse der Schrittschaltzustand angewählt werden, in dem durch erneutes Auslenken bzw. Antippen des Schaltelements in der ersten Schaltgasse dann manuell die einzelnen Vorwärtsgänge hoch- bzw. runtergeschaltet werden können. Ferner kann aus dem Fahrzustand über ein "Betätigungselement", z.B. einen S/D-Taster, in das Sportprogramm geschaltet werden. Es kann aber auch vorgesehen sein, dass man aus dem Fahrzustand durch einmaliges Auslenken des Schalthebels in der ersten Schaltgasse in das S-Programm gelangt und durch mehrmaliges Auslenken manuell hoch- bzw. runterschalten kann.
- Im Schrittschaltzustand kann durch Auslenken des Schaltelements aus der stabilen Stellung in die vordere Neutralstellung der zweiten Schaltgasse der Neutralzustand angewählt werden und durch Auslenken in die vordere Endstellung kann der Rückfahrzustand angewählt werden. Durch Auslenken des Schaltelements aus der stabilen Stellung in die hintere Endstellung der zweiten Schaltgasse kann der Fahrzustand angewählt werden. Ferner kann aus dem Schrittschaltzustand über ein "Betätigungselement", z.B. einen S/D-Taster, in das Sportprogramm geschaltet werden. Desweiteren können natürlich durch Auslenken bzw. Antippen des Schaltelements in der ersten Schaltgasse manuell die einzelnen Vorwärtsgänge hoch- bzw. runtergeschaltet werden.

Alternativ oder ergänzend dazu kann auch vorgesehen sein, dass eine Umschaltung zwischen dem Schrittschaltzustand, dem Fahrzustand und dem Sportprogramm durch eine Bewegung des Schalthebels in Querrichtung zu den Schaltgassen möglich ist.

Vorzugsweise ist das Schaltelement als "Joystick" ausgebildet. Das heißt, der Schalthebel ist nicht "mechanisch" mit dem Getriebe verbunden, sondern elektrisch mit einer Getriebesteuereinrichtung, welche die Schaltvorgänge im Getriebe über Getriebeaktuatoren ansteuert.

Vorzugsweise ist das Schaltelement, das heißt der Schalthebel mit einer gegebenen Schaltkraftcharakteristik belegt. Es kann beispielsweise vorgesehen sein, dass die Schaltkraft, die für eine Auslenkung des Schaltelements aus der stabilen Stellung der ersten Schaltgasse in die Mittelstellung der zweiten Schaltgasse im wesentlichen linear vom Auslenkweg der stabilen Stellung aus abhängt. Die Schaltkraft für diese "Querbewegung" kann beispielsweise konstant oder leicht linear ansteigend sein.

Hinsichtlich der Bewegung des Schaltelements in der zweiten Schaltgasse kann ein Schaltkraftverlauf "mit mehreren Schaltkraftmaxima" vorgesehen sein. Ausgehend von der Mittelstellung steigt die Schaltkraft zunächst auf ein erstes Maximum an, wenn der Schalthebel in die vordere bzw. hintere Neutralstellung bewegt wird. Nach Überschreiten, d.h. nach "Überdrücken" dieses ersten Schaltkraftmaximums fällt die Schaltkraft wieder leicht ab, wodurch dem Fahrer haptisch das Gefühl vermittelt wird, dass die vordere bzw. hintere Neutralstellung erreicht ist.

Wenn der Fahrer den Schalthebel weiter nach vorne bzw. hinten bewegt, steigt die Schaltkraft auf ein zweites Schaltkraftmaximum an. Dieses zweite Schaltkraftmaximum ist größer als das erste Schaltkraftmaximum. Zum Anwählen des Rückfahrzustands bzw. des Fahrzustandes über die zweite Schaltgasse muss der Fahrer also eine größere Schaltkraft aufbringen. Wenn der Fahrer dieses zweite Schaltkraftmaximum "überdrückt" erhält er haptisch eine Rückmeldung, da auch hier die Schaltkraft wieder leicht abfällt. Hieran kann der Fahrer erkennen, dass er die Stellung zum Anwählen des Rückfahrzustands bzw. des Fahrzustandes erreicht hat. Lässt er anschließend den Schalthebel los, so kehrt dieser selbsttätig in die stabile Stellung in der ersten Schaltgasse zurück.

Nach einer Weiterbildung der Erfindung ist eine Anzeigeeinrichtung vorgesehen, die ein Schaltschema aufweist, das die möglichen Auslenkstellungen des Schaltelements aus der stabilen Stellung anzeigt. Die Auslenkstellungen zum Anwählen der einzelnen aktuell anwählbaren Betriebszustände wird durch zugeordnete Symbole im Schaltschema angezeigt. Außer dem aktuellen Betriebszustand werden vorzugsweise nur diejenigen Betriebszustände schematisch angezeigt, die in Abhängigkeit vom aktuellen Betriebszustand anwählbar sind.

Vorzugsweise ist der aktuelle Betriebszustand in Bezug auf die aktuell anwählbaren Betriebszustände im Schaltschema optisch hervorgehoben, z.B. durch eine andere Farbe oder Helligkeit.

Vorzugsweise ist im Fahrzustand und im Schrittschaltzustand mindestens ein Anzeigeelement der Anzeigeeinrichtung sichtbar, das im Fahrzustand die Anwähloption "Schrittschaltzustand" anzeigt und das im Schrittschaltzustand die "manuelle Schaltoption" anzeigt.

Nach einer Weiterbildung der Erfindung weist die Anzeigeeinrichtung eine leuchtende Markierung auf, welche die stabile Stellung des Schaltelements anzeigt. Wenn das Schaltelement bzw. der Schalthebel ausgelenkt werden, erlischt diese Markierung. Nach einer Weiterbildung der Erfindung kann jedoch vorgesehen sein, dass sich die leuchtende Markierung, welche die Stellung des Schalthebels anzeigt, sich bei einer Bewegung des Schalthebels im Schaltschema der Anzeigeeinrichtung "mitbewegt".

Im folgenden wird die Erfindung anhand von Ausführungsbeispielen im Zusammenhang mit der Zeichnung näher erläutert. Es zeigen:
- Figuren 1 - 5: die Anzeigeeinrichtung in Abhängigkeit vom aktuellen Betriebszustand der Schalteinrichtung;
- Figur 6: eine Variante der Erfindung, bei der der Fahrzustand zusätzlich durch eine reine Querbewegung des Schaltelements anwählbar ist, bzw. ein Wechsel zwischen dem Fahrzustand und dem Schrittschaltzustand bzw. zwischen dem Fahrzustand und dem Schrittschaltzustand und dem Sportprogramm durch eine Querbewegung des Schalthebels möglich ist;
- Figur 7: einen Schaltkraftverlauf des Schaltelements bei einer Querbewegung von der stabilen Stellung in die Mittelstellung der zweiten Schaltgasse; und
- Figur 8: die Schaltkraftverläufe des Schaltelements bei einer Bewegung von der Mittelstellung der zweiten Schaltgasse in die beiden Endstellungen.

Die Schalteinrichtung gemäß der Erfindung weist zwei Schaltgassen auf, nämlich eine erste Schaltgasse, die im folgenden auch als rechte Schaltgasse bzw. Schrittschaltgasse bezeichnet wird und eine zweite Schaltgasse, die im folgenden als linke Schaltgasse bezeichnet wird. Zweigassenschaltungen an sich sind Stand der Technik und z. B. aus der eingangs erwähnten DE 199 38 528 A1 bekannt.

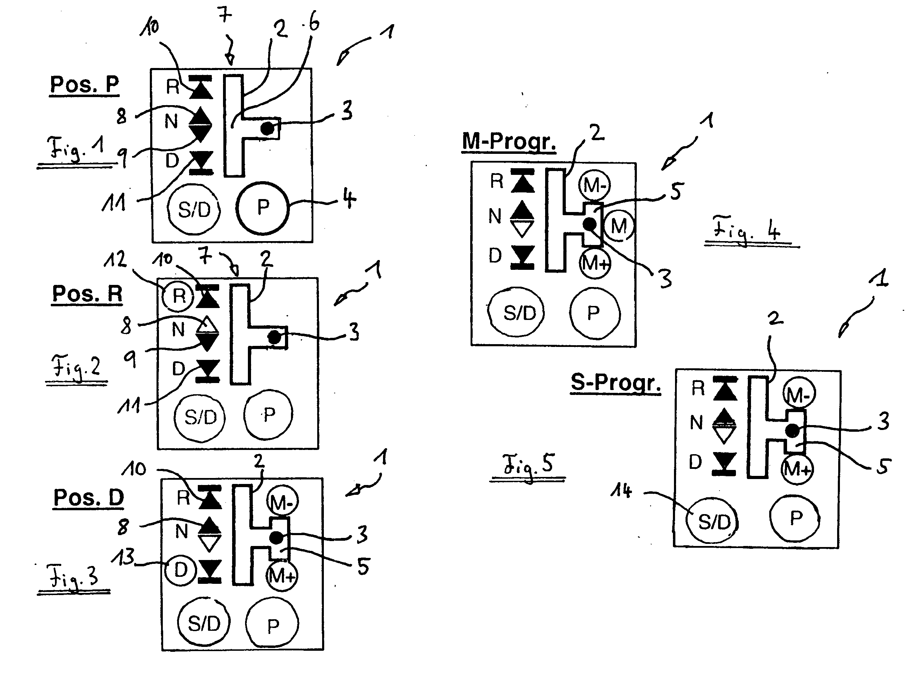

In den **Figuren 1 - 5** ist eine Anzeigeeinrichtung 1 dargestellt, die z. B. in eine Fahrzeugmittelkonsole integriert und neben dem Schalthebel (hier nicht dargestellt) angeordnet sein kann. Bei dem Schalthebel handelt es sich um einen monostabilen "Joystick".

Das heißt der Schalthebel weist eine einzige stabile Stellung auf und ist nicht unmittelbar mechanisch mit dem Getriebe gekoppelt, sondern steuert das Getriebe elektrisch an. Der Schalthebel ist aus der stabilen Stellung in Abhängigkeit vom aktuellen Betriebszustand in verschiedene Auslenkstellungen bewegbar. In der Anzeigeeinrichtung 1 ist das in Abhängigkeit vom aktuellen Betriebszustand aktuelle Schaltschema 2 dargestellt.

Die stabile Stellung des Schalthebels ist im Schaltschema 2 durch eine Leuchtmarkierung 3 dargestellt. Bei einer Bewegung des Schalthebels aus seiner stabilen Stellung kann entweder vorgesehen sein, dass die Leuchtmarkierung 3 erlischt, oder dass sie im Schaltschema entsprechend der Bewegung des Schalthebels "mitwandert".

In den **Figuren 1-5** sind folgende Betriebszustände schematisch durch Anzeigeelemente dargestellt:
- P:: Parkzustand
- R:: Rückfahrzustand
- N:: Neutralzustand
- D:: Fahrzustand (Automatikmodus mit komfortabler Schaltcharakteristik)
- S/D:: Sportprogramm (Automatikmodus mit sportlicher Schaltcharakteristik)
- M:: Schrittschaltmodus im Schrittschaltzustand.

In **Figur 1** befindet sich die Schalteinrichtung im Parkzustand, was durch einen Kreis 4 angedeutet ist. Im Parkzustand befindet sich die Schalteinrichtung beispielsweise meistens dann, wenn das Fahrzeug mit dem Zündschlüssel gestartet wird. Aus dem Parkzustand kann über den Schalthebel in den Rückfahrzustand, Neutralzustand oder in den Fahrzustand geschaltet werden. Zum Anwählen des Rückfahrzustands muss der Schalthebel zunächst aus seiner stabilen Stellung, die in einer ersten Schaltgasse 5 (vgl. Figuren 3-5) liegt, in eine Mittelstellung 6 einer zweiten Schaltgasse 7 bewegt werden. Die erste Schaltgasse 5 ist in den Figuren 1 und 2 nicht dargestellt, was im Zusammenhang mit den Figuren 3 - 5 noch näher erläutert wird.

Aus der Mittelstellung 6 der zweiten Schaltgasse 7 kann der Schalthebel dann in eine vordere Neutralstellung bzw. eine hintere Neutralstellung bewegt werden, was in der Schalteinrichtung 1 durch zwei schwarze Dreieckssymbole 8, 9 angedeutet ist. Das Dreieckssymbol 8 ist der vorderen Neutralstellung und das Dreiecksymbol 9 ist der hinteren Neutralstellung zugeordnet. Der Schalthebel kann dann weiter in der zweiten Schaltgasse 7 in eine vordere Endstellung bzw. eine hintere Endstellung bewegt werden, was hier schematisch durch Dreiecksymbole 10, 11 angedeutet ist.

Befindet sich die Schalteinrichtung im Parkzustand (Figur 1) so kann der Neutralzustand wahlweise angewählt werden, in dem der Schalthebel aus seiner stabilen Stellung in der ersten Schaltgasse nach links und etwas nach vorne bzw. etwas nach hinten in die vordere bzw. hintere Neutralstellung 8 bzw. 9 bewegt wird.

Soll aus dem Parkzustand heraus in den Rückfahrzustand geschaltet werden, so braucht der Schalthebel lediglich wie bei einer herkömmlichen Handschaltung nach vorne links in die Endstellung 10 der zweiten Schaltgasse bewegt werden. Die vordere Neutralstellung wird zum Anwählen des Rückfahrzustandes "überdrückt".

Soll in den Fahrzustand geschaltet werden, so braucht der Schalthebel aus seiner stabilen Stellung lediglich nach hinten links in die Endstellung 11 bewegt werden. Dabei wird die hintere Neutralstellung überdrückt.**Figur 2** zeigt die Anzeigeinrichtung 1 im Rückfahrzustand. Der Schalthebel wurde also aus dem Parkzustand (Figur 1) nach vorne links bewegt. Nach dem Loslassen des Schalthebels ist dieser wieder in seine stabile Stellung zurückgekehrt, was durch die Leuchtmarkierung 3 angedeutet ist. Dass in **Figur 2** der Rückfahrzustand aktiv ist, ist durch einen Kreis 12 angedeutet.

Aus dem Rückfahrzustand kann wahlweise in den Neutralzustand oder in den Fahrzustand geschaltet werden. Um in den Neutralzustand zu schalten, muss der Schalthebel in die hintere Neutralstellung 9 bewegt werden. Die vordere Neutralstellung 10 ist im Rückfahrzustand deaktiviert, was hier schematisch durch ein nicht ausgemaltes Dreieck 10 dargestellt ist.

. Alternativ dazu kann aus dem Rückfahrzustand auch in den Fahrzustand D geschaltet werden, in dem der Schalthebel entsprechend dem schwarzen Dreieck 11 in die hintere Endstellung der zweiten Schaltgasse 7 bewegt wird.

Wird der Schalthebel nach vorne links bewegt, was durch das schwarze Dreieck 10 dargestellt ist, so bleibt der Rückfahrzustand unverändert beibehalten. Weitere Schaltmöglichkeiten aus dem Rückfahrzustand sind bei diesem Ausführungsbeispiel aus Sicherheitsgründen nicht vorgesehen.

**Figur 3** zeigt die Anzeigeeinrichtung 1, wenn sich die Schalteinrichtung im Fahrzustand D befindet, was durch einen Kreis 13 angedeutet ist. Aus dem Fahrzustand D kann wahlweise in den Rückfahrzustand R, den Neutralzustand N, den Schrittschaltzustand (M-Programm) oder das Sportprogramm (S-Programm) geschaltet werden. Dass auch in den Schrittschaltzustand geschaltet werden kann, ist daran ersichtlich, dass nun in der Anzeigeeinrichtung 1 die erste Schaltgasse 5 schematisch dargestellt ist. Ferner sind zwei Schrittschaltsymbole M- bzw. M+ dargestellt, die anzeigen, dass im Schrittschaltzustand durch Bewegen des Schaltelementes in der ersten Schaltgasse nach vorne ein Gang manuell heruntergeschaltet werden kann und durch Bewegen des Schalthebels nach hinten ein Gang manuell hochgeschaltet werden kann.

Um aus dem Fahrzustand D in den Schrittschaltzustand (M-Programm) zu gelangen, braucht der Schalthebel lediglich in der ersten Schaltgasse entweder einmal nach vorne oder einmal nach hinten angetippt zu werden. Der Schrittschaltzustand (M-Programm) ist in **Fig. 4** dargestellt.

Alternativ dazu ist es auch möglich, aus dem Fahrzustand D den Neutralzustand anzuwählen. Hierzu muss der Schalthebel nach links in die zweite Schaltgasse und dort in die vordere Neutralstellung 8 geschaltet werden.

Alternativ dazu kann aus dem Fahrzustand D heraus auch in den Rückfahrzustand geschaltet werden. Hierzu muss der Schalthebel aus seiner Neutralstellung in der ersten Schaltgasse nach vorne links in die vordere Endstellung 10 bewegt werden.

**Figur 5** zeigt die Anzeigeinrichtung, wenn sich die Schalteinrichtung im Sportprogramm befindet, was hier durch das mit 14 bezeichnete Symbol "S/D" angezeigt wird.

In das Sportprogramm kann man aus dem Fahrzustand beispielsweise dadurch gelangen, indem man ein Betätigungselement betätigt, z.B. einen "S/D-Taster". Das Betätigungselement zum Anwählen des Sportprogramms kann am Schalthebel, im Bereich des Schalthebels oder am Lenkrad vorgesehen sein kann. Es kann auch in den Schalthebel integriert oder durch den Schalthebel selbst gebildet sein.

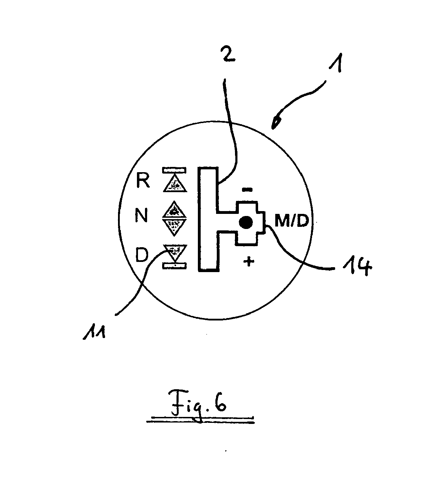

Alternativ oder ergänzend kann vorgesehen sein, dass man durch eine Bewegung des Schalthebels nach rechts (vgl. Fig. 6) in das Sportprogramm gelangt bzw. durch eine Querbewegung des Schalthebels zwischen dem Fahrzustand, dem Schrittschaltzustand (M-Programm) und dem Sportprogramm (S-Programm) umschalten kann.

Ferner kann vorgesehen sein, dass man aus dem Fahrzustand durch einmaliges Betätigen des Schalthebels in der ersten Schaltgasse zunächst in das Sportprogramm gelangt und erst durch nochmaliges Betätigen des Schalthebels in der ersten Schaltgasse in das M-Programm, in dem einzelne Gänge manuell hoch- bzw. runtergeschaltet werden können.

In dem in **Fig. 5** dargestellten Betriebszustand (Sportprogramm) wird zwar das Getriebe weiterhin automatisch geschaltet. Die Automatik weist aber eine andere Schaltcharakteristik auf als im Fahrzustand D. Die Schaltcharakteristik im Schaltzustand der Fig. 5 ist beispielsweise sportlicher ausgelegt als der Automatikmodus des Fahrzustandes. Das heißt im Automatikmodus des Schrittschaltzustandes werden einzelne Gänge bis in höhere Drehzahlen ausgedreht.

Ferner kann vorgesehen sein, dass im Schrittschaltzustand (Fig. 4) eine oder mehrere Begrenzungsstufen anwählbar bzw. fest vorgegeben sind. Unter dem Begriff "Begrenzungsstufe" ist zu verstehen, dass das M-Programm beim manuellen Hoch- bzw. Runterschalten auf einen oberen höchsten Gang, z.B. den vierten von sechs vorhandenen Gängen, bzw. einen unteren Gang, z.B. den zweiten Gang "begrenzt" ist. Es kann also beispielsweise vorgesehen sein, dass das Getriebe im Schrittschaltzustand nur zwischen den Gängen zwei bis vier von insgesamt sech vorgesehenen Vorwärtsgängen hin- und herschaltbar ist.

**Figur 6** zeigt eine Variante der Erfindung, bei der im Unterschied zum Ausführungsbeispiel der Figuren 1 bis 5 eine weitere Schaltmöglichkeit vorgesehen ist. Der Schalthebel kann aus seiner stabilen Stellung heraus zusätzlich nach rechts bewegt werden, was im Schaltschema 2 der Anzeigeeinrichtung 1 durch eine "Ausbuchtung" 14 dargestellt ist. Wenn sich die Schalteinrichtung im Schrittschaltzustand befindet, kann in den Fahrzustand geschaltet werden, entweder durch Bewegen des Schalthebels in die Endstellung nach "hinten links" oder durch eine einfache Querbewegung nach rechts.

Alternativ dazu kann vorgesehen sein, dass ganz allgemein durch eine "Querbewegung" des Schalthebels zwischen dem Automatikmodus des Fahrzustandes, dem Sportprogramm und dem manuell schaltbaren Schrittschaltzustand umgeschaltet werden kann.

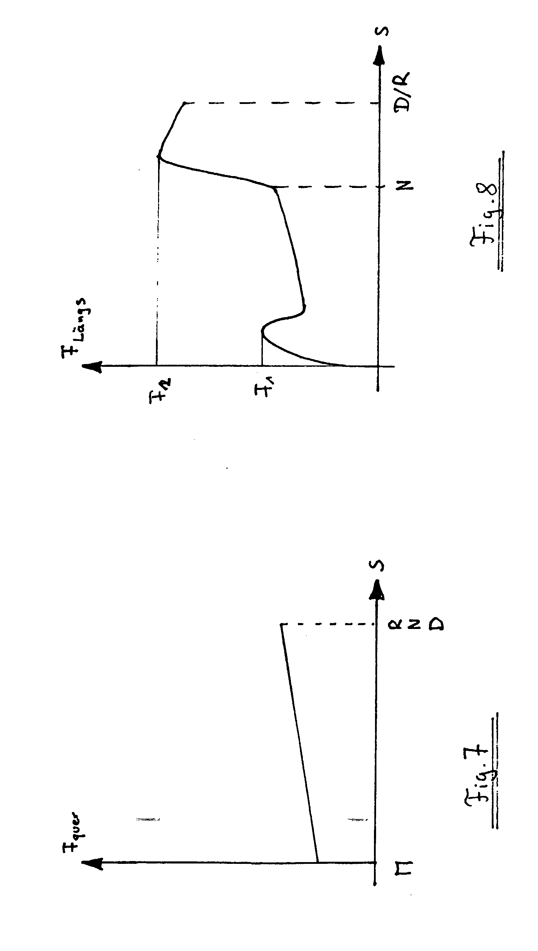

**Figur 7** zeigt den Schaltkraftverlauf F_{quer} bei einer Bewegung des Schalthebels aus der stabilen Stellung in der ersten Schaltgasse in die Mittelstellung 6 (vgl. Fig. 1) der zweiten Schaltgasse. Bei dem hier gezeigten Ausführungsbeispiel hängt die Schaltkraft linear vom Auslenkweg aus der stabilen Stellung ab und steigt von der stabilen Stellung aus leicht zur Mittelstellung der zweiten Schaltkraft hin an.

**Figur 8** zeigt den Schaltkraftverlauf bei F_{längs} bei einer Bewegung des Schalthebels in der zweiten Schaltgasse von der Mittelstellung 6 (vgl. Fig. 1) in die vordere oder hintere Endstellung. Ausgehend von der Mittelstellung steigt die Schaltkraft bis zu einem ersten Schaltkraftmaximum F₁ an. Nach Überschreiten dieses Schaltkraftmaximums F₁ fällt die Schaltkraft ab, was dem Fahrer haptisch anzeigt, dass die vordere bzw. hintere Neutralstellung N erreicht ist. Will der Fahrer weiter nach vorne bzw. hinten in den Fahrzustand bzw. den Rückfahrzustand schalten, so muss er eine höhere Schaltkraft aufbringen. Dementsprechend steigt der Schaltkraftverlauf auf ein zweites Maximum F₂ an und fällt bei Erreichen der vorderen bzw. hinteren Endstellung (vgl. Figuren 1 bis 5) wieder leicht ab. Wenn der Fahrer den Schalthebel loslässt, kehrt dieser wieder selbsttätig in die stabile Stellung zurück.

## Patentansprüche

1. Schalteinrichtung mit einem Schaltelement zum Anwählen mindestens folgender Betriebszustände eines Getriebes:
• Rückfahrzustand (R),
• Neutralzustand (N),
• Fahrzustand (D), in dem einzelne Vorwärtsgänge automatisch gemäß einem Automatikmodus durch eine Getriebesteuerung schaltbar sind,
• Schrittschaltzustand (M), in dem durch manuelles Betätigen des Schaltelements einzelne Vorwärtsgänge schaltbar sind, wobei
eine erste und eine zweite Schaltgasse (5, 7) vorgesehen sind, in denen das Schaltelement von Hand bewegbar ist,
das Schaltelement in der ersten Schaltgasse eine stabile Stellung (3) aufweist, aus der es zum Anwählen einzelner Schaltzustände (R, N, D, M) und zum manuellen Schalten der einzelnen Vorwärtsgänge auslenkbar ist, wobei die stabile Stellung (3) in der ersten Schaltgasse (5) die einzige stabile Stellung des Schaltelements ist und dass das Schaltelement nach dem Loslassen aus jeder möglichen Auslenkstellung (9-11, 14, M-, M+) selbsttätig in die stabile Stellung zurückkehrt,
**dadurch gekennzeichnet, dass**
eine Überwachungseinrichtung vorgesehen ist, die ein Anwählen des Schrittschaltzustandes (M) nur dann gestattet, wenn sich die Schalteinrichtung im Fahrzustand (D) befindet.

2. Schalteinrichtung nach Anspruch 1, **dadurch gekennzeichnet, dass** in der zweiten Schaltgasse (7)
eine vordere Endstellung (10) vorgesehen ist, zum Anwählen des Rückfahrzustandes (R), eine hintere Endstellung (11) zum Anwählen des Fahrzustandes (D),
eine zwischen den Endstellungen liegende Mittelstellung (6), die durch eine Querauslenkung des Schaltelements in Bezug auf die Schaltgassen aus der stabilen Stellung (3) in die zweite Schaltgasse (7) erreichbar ist,
eine vordere Neutralstellung (8), die zwischen der Mittelstellung (6) und der vorderen Endstellung (10) liegt und die zum Anwählen des Neutralzustandes (N) vorgesehen ist, wenn sich die Schalteinrichtung im Fahrzustand (D) bzw. im Schrittschaltzustand (M) befindet und
eine hintere Neutralstellung (9), die zwischen der Mittelstellung (6) und der hinteren Endstellung (11) liegt und die zum Anwählen des Neutralzustandes vorgesehen ist, wenn sich die Schalteinrichtung im Rückfahrzustand (R) befindet.

3. Schalteinrichtung nach Anspruch 2, **dadurch gekennzeichnet, dass** das Schaltelement derart angeordnet ist, dass die Schaltkraft (F_{quer}), die für eine Auslenkung des Schaltelements aus der stabilen Stellung (3) der ersten Schaltgasse (5) in die Mittelstellung (6) der zweiten Schaltgasse (7) erforderlich ist, im wesentlichen linear vom Auslenkweg (s) aus der stabilen Stellung (3) abhängt.

4. Schalteinrichtung nach einem der Ansprüche 1 oder 2, **dadurch gekennzeichnet, dass** das Schaltelement derart angeordnet ist, dass der Schaltkraftverlauf (F_{längs}) des Schaltelements für eine Auslenkung des Schaltelements aus der Mittelstellung (6) der zweiten .Schaltgasse (7) in Richtung der vorderen Neutralstellung (8) und der hinteren Neutralstellung (9) jeweils ein erstes Schaltkraftmaximum (F₁) aufweist und dass der Schaltkraftverlauf für eine weitere Auslenkung in die vordere bzw. hintere Endstellung (10, 11) jeweils ein zweites Schaltkraftmaximum (F₂) aufweist, wobei die zweiten Schaltkraftmaxima (F₂) jeweils größer sind als das jeweils zugeordnete erste Schaltkraftmaximum (F₁).

5. Schalteinrichtung nach einem der Ansprüche 1 bis 4, **dadurch gekennzeichnet, dass** der Schrittschaltzustand (M) durch Auslenken des Schaltelements aus der stabilen Stellung (3) in Längsrichtung der ersten Schaltgasse (5) anwählbar ist und dass durch erneutes Auslenken in Längsrichtung der ersten Schaltgasse im Schrittschaltzustand (M) die einzelnen Vorwärtsgänge manuell schaltbar sind.

6. Schalteinrichtung nach einem der Ansprüche 1 bis 5, **dadurch gekennzeichnet, dass** eine Bewegung des Schaltelements in Längsrichtung der ersten Schaltgasse (5) in jedem Betriebszustand (P, R, N, D, M) möglich ist, wobei aber die Überwachungseinrichtung ein Anwählen des Schrittschaltzustandes (M) elektrisch verhindert, wenn ein anderer als der Fahrzustand (D) der aktuelle Betriebszustand ist.

7. Schalteinrichtung nach einem der Ansprüche 1 bis 6, **dadurch gekennzeichnet, dass** eine mechanische Sperreinrichtung vorgesehen ist, die eine Bewegung des Schaltelements in Längsrichtung der ersten Schaltgasse (5) sperrt, wenn ein anderer als der Fahrzustand (D) der aktuelle Betriebszustand ist.

8. Schalteinrichtung nach einem der Ansprüche 1 bis 7, **dadurch gekennzeichnet, dass** die Schalteinrichtung aus dem Rückfahrzustand (R) durch Auslenken des Schaltelements in Längsrichtung der ersten Schaltgasse (5) in den Neutralzustand (N) schaltbar ist.

9. Schalteinrichtung nach einem der Ansprüche 2 bis 8, **dadurch gekennzeichnet, dass** die Schalteinrichtung aus dem Schrittschaltzustand (M) über zwei verschiedene Auslenkwege des Schaltelements aus der stabilen Stellung in den Fahrzustand (D) schaltbar ist, nämlich zum einen durch eine erste Querbewegung in die Mittelstellung (6) und von dort durch eine Längsbewegung in der zweiten Schaltgasse (7) in die hintere Endstellung und zum anderen durch eine der ersten Querbewegung entgegengesetzte Querbewegung in eine seitliche Auslenkstellung (14), die in Bezug auf die zweite Schaltgasse (7) auf der anderen Seite der ersten Schaltgasse (5) liegt.

10. Schalteinrichtung nach einem der Ansprüche 1 bis 9, **dadurch gekennzeichnet, dass** die Schalteinrichtung aus dem Fahrzustand heraus durch Auslenken des Schaltelements aus der stabilen Stellung in Längsrichtung der ersten Schaltgasse (5) in einen zweiten Automatikmodus schaltbar ist, dessen Schaltchakteristik sich von der Schaltcharakteristik des Fahrzustandes (D) unterscheidet und dass zum manuellen Schalten der Vorwärtsgänge bzw. zum Aktivieren des Schrittschaltzustandes ein nochmaliges Betätigen des Schaltelements in der ersten Schaltgasse (5) erforderlich ist.

11. Schalteinrichtung nach einem der Ansprüche 1 bis 10, **dadurch gekennzeichnet, dass** ein erstes Betätigungselement zum Anwählen eines Parkzustandes (P) vorgesehen ist.

12. Schalteinrichtung nach Anspruch 11, **dadurch gekennzeichnet, dass** das erste Betätigungselement in das Schaltelement integriert ist.

13. Schalteinrichtung nach Anspruch 11 oder 12, **dadurch gekennzeichnet, dass** das erste Betätigungselement ein elektrischer Taster ist.

14. Schalteinrichtung nach einem der Ansprüche 11 bis 13, **dadurch gekennzeichnet, dass** ein zweites Betätigungselement zum Anwählen eines Parkzustandes (P) vorgesehen ist, wobei das zweite Betätigungselement durch eine Schalteinrichtung zum Ein- bzw. Ausschalten eines Fahrzeugbordnetzes gebildet ist.

15. Schalteinrichtung nach einem der Ansprüche 2 bis 14, **dadurch gekennzeichnet, dass** im Parkzustand (P) durch Auslenken des Schaltelements aus der stabilen Stellung (3) in die vordere bzw. hintere Neutralstellung (8, 9) der Neutralzustand (N) und durch Auslenken in eine der beiden Endstellungen (10, 11) der Fahrzustand (D) bzw. der Rückfahrzustand (R) anwählbar ist und der Schrittschaltzustand (M) gesperrt ist,
im Rückfahrzustand (R) durch Auslenken des Schaltelements aus der stabilen Stellung in die hintere Neutralstellung (9) der Neutralzustand (N) und durch Auslenken in die hintere Endstellung (11) der Fahrzustand (D) anwählbar ist und der Schrittschaltzustand (M) gesperrt ist,
im Neutralzustand (N) durch Auslenken des Schaltelements aus der stabilen Stellung (3) in die vordere Endstellung (10) der Rückfahrzustand (R) und in die hintere Endstellung (11) der Fahrzustand (D) anwählbar ist und der Schrittschaltzustand (M) gesperrt ist,
im Fahrzustand (D) durch Auslenken des Schaltelements aus der stabilen Stellung (3) in die vordere Neutralstellung (8) der Neutralzustand und durch Auslenken in die vordere Endstellung (10) der Rückfahrzustand (R) anwählbar ist und durch Auslenken des Schaltelements aus der stabilen Stellung (3) in Längsrichtung der ersten Schaltgasse (5) der Schrittschaltzustand (M) anwählbar ist und durch erneutes Auslenken des Schaltelements aus der stabilen Stellung (3) in Längsrichtung der ersten Schaltgasse (5) die einzelnen Vorwärtsgänge manuell schaltbar sind.

16. Schalteinrichtung nach einem der Ansprüche 1 bis 15, **dadurch gekennzeichnet, dass** die Schaltgassen (5, 7) im wesentlichen parallel zueinander sind.

17. Schalteinrichtung nach einem der Ansprüche 1 bis 16, **dadurch gekennzeichnet, dass** das Schaltelement ein elektrisches Schalterelement ist, das elektrisch mit einer Getriebeelektronik verbunden ist, die zur Ansteuerung von Getriebeaktuatoren vorgesehen ist.

18. Schalteinrichtung nach einem der Ansprüche 1 bis 17, **dadurch gekennzeichnet, dass** eine Anzeigeeinrichtung (1) vorgesehen ist, die ein Schaltschema (2) aufweist, das die möglichen Auslenkstellungen (9 - 11, 14, M-, M+) des Schaltelements aus der stabilen Stellung (3) zeigt und dass die Auslenkstellungen zum Anwählen der einzelnen aktuell anwählbaren Betriebsstellungen durch zugeordnete Symbole (R, N, D, M) angezeigt sind, wobei außer dem aktuellen Betriebszustand nur diejenigen Betriebszustände angezeigt sind, die in Abhängigkeit vom aktuellen Betriebszustand durch Auslenken des Schaltelements aktuell anwählbar sind.

19. Schalteinrichtung nach Anspruch 18, **dadurch gekennzeichnet, dass** der aktuelle Betriebszustand in Bezug auf die aktuell anwählbaren Betriebszustände im Schaltschema optisch hervorgehoben angezeigt ist.

20. Schalteinrichtung nach einem der Ansprüche 18 oder 19, **dadurch gekennzeichnet, dass** im Fahrzustand (D) und im Schrittschaltzustand (M) mindestens ein Anzeigeelement (M-, M+) sichtbar ist, das im Fahrzustand (D) die Anwähloption Schrittschaltzustand (M).

21. Schalteinrichtung nach einem der Ansprüche 10 bis 20, **dadurch gekennzeichnet, dass** mindestens ein Anzeigeelement (S/D, M) vorgesehen ist, das anzeigt, ob der zweite Automatikmodus oder der Schrittschaltmodus aktiviert ist.

22. Schalteinrichtung nach einem der Ansprüche 18 bis 21, **dadurch gekennzeichnet, dass** das Schaltschema (2) eine leuchtende Markierung (3) aufweist, welche die stabile Stellung des Schaltelements anzeigt, wobei diese Markierung (3) erlischt, wenn das Schaltelement aus der stabilen Stellung ausgelenkt wird.

23. Schalteinrichtung nach einem der Ansprüche 18 bis 21, **dadurch gekennzeichnet, dass** das Schaltschema (2) eine leuchtende Markierung (3) aufweist, welche die aktuelle Stellung des Schaltelements anzeigt und zwar auch während einer Bewegung des Schaltelements aus der stabilen Stellung in eine der möglichen Auslenkstellungen.

24. Schalteinrichtung nach einem der Ansprüche 1 bis 23, **dadurch gekennzeichnet, dass** im Schrittschaltzustand (M) eine Begrenzungsschaltstufe vorgegeben bzw. anwählbar ist, wobei durch die Begrenzungsschaltstufe die Anzahl der manuell anwählbaren Vorwärtsgänge auf einen Teil der insgesamt vorhandenen Vorwärtsgänge begrenzt ist.

## Claims

1. A switching device comprising a switching element for selecting at least the following operating states of a gear unit:Reversing (R),
• Neutral (N),
• Driving (D), in which individual forward gears are automatically engaged by an automatic gear change, and
• Stepping (M), in which individual forward gears can be engaged by manual actuation of the switching element wherein
a first and a second gear-shift lane (5, 7) are provided, in which the switching element is movable by hand,
in the first lane the switching element has a stable position (3) out of which it can be moved in order to select individual switching states (R, N, D, M) and manually engage the individual forward gears, wherein the stable position (3) in the first lane (5) is the only stable position of the switching element, and after release the switching element automatically returns from any possible moved-out position (9-11, 14, M-, M+) into the stable position,
**characterised in that**
a monitoring device is provided which enables the stepping state (M) to be selected only when the switching device is in the driving state (D).

2. A switching device according to claim 1, **characterised in that** in the second lane (7)
a front end position (10) is provided for selecting the reversing state (R),
a rear end state (11) is provided for selecting the driving state (D),
a middle position (6) between the end positions is obtainable by transversely moving the switching element, relative to the lanes, out of the stable position (3) into the second lane (7),
a front neutral position (8) lies between the middle position (6) and the front end position (10) and is provided for selecting the neutral state (N) when the switching device is in the driving state (D) or the stepping state (M), and
a rear neutral position (9) between the middle position (6) and the rear end position (11) is provided for selecting the neutral state when the switching device is in the reversing state (R).

3. A switching device according to claim 2, **characterised in that** the switching element is arranged so that the force (Fₜᵣₐₙₛᵥₑᵣₛₑ) needed for moving the switching element out of the stable position (3) in the first lane (5) into the middle position (6) in the second lane (7) depends in substantially linear manner on the travel (s) out of the stable position (3).

4. A switching device according to claim 1 or claim 2, **characterised in that** the switching device is arranged so that the variation in force (F_{longitudinal}) of the switching element for moving it from the middle position (6) in the second switching lane (7) towards the front neutral position (8) and the rear neutral position (9), in each case has a first maximum (F₁), and the variation in force for moving further out into the front or rear end position (10, 11) has respective second maxima (F₂), wherein the second maxima (F₂) in each case are greater than the respective associated first maximum (F₁).

5. A switching device according to any of claims 1 to 4, **characterised in that** the stepping state (M) is selectable by moving the switching element out of the stable position (3) in the longitudinal direction of the first lane (5), and the individual forward gears can be manually engaged by additional movement in the longitudinal direction of the first lane in the stepping state (M).

6. A switching device according to any of claims 1 to 5, **characterised in that** a movement of the switching element in the longitudinal direction of the first lane (5) is possible in any operating state (P, R, N, D, M), but the monitoring device electrically prevents selection of the stepping state (M) when the current operating state is not the driving state (D).

7. A switching device according to any of claims 1 to 6, **characterised in that** a mechanical locking device is provided and prevents the switching element moving in the longitudinal direction of the first lane (5) when the current operating state is not the driving state (D).

8. A switching device according to any of claims 1 to 7, **characterised in that** the switching device is movable from the reversing state (R) into the neutral state (N) by moving the switching element in the longitudinal direction of the first lane (5).

9. A switching device according to any of claims 2 to 8, **characterised in that** the switching device is movable out of the state (M) along two different paths of the switching element out of the stable state into the driving state (D), i.e. on the one hand by a first transverse movement into the middle state (6) and then by a longitudinal movement along the second lane (7) into the rear end position and on the other hand by transverse motion opposite to the first transverse motion into a lateral moved-out position (14) which relative to the second lane (7) lies on the other side of the first lane (5).

10. A switching device according to any of claims 1 to 9, **characterised in that** the switching device can be moved from the driving state by moving the switching element out of the stable position along the first lane (5) into a second automatic mode, the switching characteristic of which differs from the switching characteristic of the driving state (D), and additional actuation of the switching element along the first lane (5) is necessary for manually engaging the forward gears or for activating the stepping state.

11. A switching device according to any of claims 1 to 10, **characterised in that** a first actuating element is provided for selecting a parking state (P).

12. A switching device according to claim 11, **characterised in that** the first actuating element is incorporated in the switching element.

13. A switching device according to claim 11 or claim 12, **characterised in that** the first actuating element is an electric scanner.

14. A switching device according to any of claims 11 to 13, **characterised in that** a second actuating element is provided for selecting a parking state (P), wherein the second actuating element is in the form of a switching device for switching on or off an electrical system in the vehicle.

15. A switching device according to any of claims 2 to 14, **characterised in that** in the parking state (P) the neutral state (N) is selectable by moving the switching element out of the stable position (3) into the front or rear neutral position (8, 9), and the driving state (D) or the reversing state (R) can be selected and the stepping state (M) is blocked by moving into one of the two end positions (10, 11),
in the reversing state (R) the neutral state (N) is selected by moving the switching element out of the stable position into the rear neutral position (9) and the driving state (D) is selected and the stepping state (M) is blocked by moving into the rear end position (11), and
in the neutral state (N) the reversing state (R) is selected by moving the switching element out of the stable position (3) into the front end position (10) and in the rear end position (11) the driving state (D) is selected and the stepping state (M) is blocked,
in the driving state (D) the neutral state is selectable by moving the switching element out of the stable position (3) into the front neutral position and the reversing state (R) is selectable by moving into the front end position (10) and the stepping state (M) is selectable by moving the switching element out of the stable position (3) in the longitudinal direction of the first lane (5) and the individual forward gears are manually selectable by additional movement of the switching element out of the stable position (3) in the longitudinal direction of the first lane (5).

16. A switching device according to any of claims 1 to 15, **characterised in that** the lanes (5, 7) are substantially parallel with one another.

17. A switching element according to any of claims 1 to 16, **characterised in that** the switching element is an electric switch electrically connected to an electronic gear unit for actuating the gear actuators.

18. A switching device according to any of claims 1 to 17, **characterised in that** a display unit (1) is provided comprising a circuit diagram (2) which shows the possible moved-out positions (9-11, 14, M-, M+) of the switching device out of the stable position (3), and the moved-out positions for selecting the individual currently-selectable operating positions are indicated by associated symbols (R, N, D, M), wherein apart from the current operating state, only those operating states are shown which are currently selectable in dependence on the current operating state by moving the switching element.

19. A switching device according to claim 18, **characterised in that** the current operating state is optically highlighted in the circuit diagram relative to the currently selectable operating states.

20. A switching device according to claim 18 or claim 19, **characterised in that** in the driving state (D) and in the stepping state (M) at least one display element (M-, M+) is visible, which in the driving state (D) the selecting option stepping state (M).

21. A switching device according to any of claims 10 to 20, **characterised in that** at least one indicating element (S/D, M) is provided, showing whether the second automatic mode or the stepping mode has been activated.

22. A switching device according to any of claims 18 to 21, **characterised in that** the circuit diagram (2) has luminous markings (3) which indicate the stable position of the switching element, whereas the marking (3) goes out when the switching element has been moved out of the stable position.

23. A switching device according to any of claims 18 to 21, **characterised in that** the circuit diagram (2) has luminous markings (3) which indicate the current position of the switching element, including movement of the switching element from the stable position into one of the possible moved-out positions.

24. A switching device according to any of claims 1 to 23, **characterised in that** in the stepping state (M), a limiting regulating step is provided or selectable, wherein the limiting regulating state limits the number of manually selectable forward gears to a part of the total available forward gears.

## Revendications

1. Sélecteur comportant un élément de commutation pour sélectionner au moins l'un des modes de fonctionnement de la boite de vitesses :
- la marche-arrière (R),
- le point mort (N),
- la marche-avant (D), dans lequel les rapports de vitesses de marche-avant sont passés automatiquement selon le mode automatique de la commande de la boîte de vitesses,
- la commande manuelle (M), selon laquelle l'actionnement manuel du sélecteur fait passer les différents rapports de marche-avant, et
un premier et un second couloir de commutation (5, 7) dans lesquels l'élément de commutation se déplace manuellement,
l'élément de commutation ayant dans le premier couloir, une position stable (3) à partir de laquelle il peut être déplacé pour sélectionner les différents modes de fonctionnement (R, N, D, M) et pour commuter manuellement les différents rapports de marche-avant, la position stable (3) du premier couloir (5) étant l'unique position stable de l'élément de commutation et après sa libération, l'élément de commutation revient automatiquement dans la position stable à partir de n'importe quelle position de débattement possible (9-11, 14, M-, M+),
sélecteur **caractérisé par**
une installation de surveillance qui ne permet la sélection du mode de commutation manuelle (M) que si le sélecteur est dans le mode de marche-avant (D).

2. Sélecteur selon la revendication 1,
**caractérisé en ce que** le second couloir de commutation (7) a :
- une première position de fin de course avant (10) pour sélectionner la marche-arrière (R),
- une position de fin de course arrière (11) pour sélectionner la marche-avant (D),
- une position intermédiaire (6) entre les deux positions de fin de course dans laquelle on arrive par un débattement transversal de l'élément de commutation par rapport au couloir de commutation en partant de la position stable (3) dans le second couloir de commutation (7),
- une position neutre avant (8) entre la position intermédiaire (6) et la position de fin de course avant (10) pour sélectionner le point mort (N) si le sélecteur est en marche-avant (D) ou en mode manuel (M), et
- une position neutre arrière (9) entre la position intermédiaire (6) et la position de fin de course arrière (11) pour sélectionner le point mort lorsque le sélecteur est en marche-arrière (R).

3. Sélecteur selon la revendication 2,
**caractérisé en ce que**
l'élément de commutation est installé de sorte que la force de commutation (F_{quer}) pour déplacer l'élément de commutation à partir de la position stable (3) du premier couloir de commutation (5) dans la position intermédiaire (6) du second couloir de commutation (7) dépend pratiquement linéairement de la course de débattement (S) à partir de la position stable (3).

4. Sélecteur selon l'une des revendications 1 ou 2,
**caractérisé en ce que**
l'élément de commutation est installé de sorte que la course de la force de commutation (F_{lângs}) pour déplacer l'élément de commutation à partir de la position intermédiaire (6) du second couloir de commutation (7) en direction du point mort avant (8) et du point mort arrière (9) présente respectivement un premier maximum (F₁) et que la courbe de la force de commutation pour la suite du déploiement dans la position de fin de course avant ou arrière (10, 11) présente respectivement un second maximum (F₂), ce second maximum (F₂) étant supérieur au premier maximum (F₁).

5. Sélecteur selon l'une des revendications 1 à 4,
**caractérisé en ce que**
le mode de commande manuelle (M) se fait par le déplacement de l'élément de commutation à partir de la position stable (3) dans la direction longitudinale du premier couloir de commutation (5) et les différents rapports de vitesse se commutent manuellement par un nouveau déplacement dans la direction longitudinale du premier couloir de commutation dans le mode manuel (M).

6. Sélecteur selon l'une des revendications 1 à 5,
**caractérisé en ce que**
le mouvement de l'élément de commutation dans la direction longitudinale du premier couloir de commutation (5) dans chacun des modes de fonctionnement (P, R, N, D, M) est possible mais l'installation de surveillance interdit électriquement la sélection du mode manuel (M) si un autre mode de fonctionnement actuel que le mode (D) est activé.

7. Sélecteur selon l'une des revendications 1 à 6,
**caractérisé par**
une installation de verrouillage mécanique qui bloque le mouvement de l'élément de commutation dans la direction longitudinale du premier couloir de commutation (5) si un autre mode de fonctionnement que le mode de fonctionnement (D) est activé.

8. Sélecteur selon l'une des revendications 1 à 7,
**caractérisé en ce que**
le sélecteur peut être commuté vers le point mort (N) à partir de la marche-arrière (R) par débattement de l'élément de commutation dans la direction longitudinale du premier couloir (5).

9. Sélecteur selon l'une des revendications 2 à 8,
**caractérisé en ce que**
le sélecteur peut commuter de la commande manuelle (M) par deux chemins de débattement différents de l'élément de commutation à partir de la position stable dans le mode de marche-avant (D), à savoir par un premier mouvement transversal dans la position intermédiaire (6) et à partir de là, par un mouvement longitudinal dans le second couloir de commutation (7) jusqu'à la position de fin de course arrière et d'autre part, par un mouvement transversal opposé au premier mouvement transversal jusque dans la position latérale de débattement (14) située dans le second couloir de commutation (7) dans une position latérale (14) de débattement de l'autre côté du premier couloir de commutation (5).

10. Sélecteur selon l'une des revendications 1 à 9,
**caractérisé en ce qu'**
il peut être commuté à partir du mode de fonctionnement par débattement de l'élément de commutation de la position stable dans la direction longitudinale du premier couloir de commutation (5) jusque dans le second mode automatique dont la caractéristique de commutation diffère de celle du mode (D) et qui, pour la commutation manuelle des rapports de marche-avant, c'est-à-dire pour activer la commande manuelle, nécessite un nouvel actionnement de l'élément de commutation dans le premier couloir de commutation (5).

11. Sélecteur selon l'une des revendications 1 à 10,
**caractérisé par**
un premier élément d'actionnement pour sélectionner le mode de stationnement (parking P).

12. Sélecteur selon la revendication 11,
**caractérisé en ce que**
le premier élément d'actionnement est intégré dans l'élément de commutation.

13. Sélecteur selon la revendication 11 ou 12,
**caractérisé en ce que**
le premier élément d'actionnement est un bouton électrique.

14. Sélecteur selon l'une des revendications 11 à 13,
**caractérisé par**
un second élément d'actionnement pour sélectionner le mode de stationnement (P) constitué par une installation de commutation pour brancher ou couper le réseau embarqué du véhicule.

15. Sélecteur selon l'une des revendications 2 à 14,
**caractérisé en ce que**
- dans le mode de stationnement (P), en déplaçant l'élément de commutation à partir de la position stable (3) dans la position neutre avant ou arrière (8, 9), on verrouille le point mort (N) et en déplaçant dans l'une des deux positions de fin de course (10, 11), on sélectionne la marche-avant (D) ou la marche-arrière (R) et on verrouille le mode manuel (M),
- en marche-arrière (R), en débattant l'élément de commutation à partir de la position stable dans la position neutre arrière (9), on sélectionne le point mort (N) et en déplaçant dans la position de fin de course arrière (11), on sélectionne le mode de marche-avant (D) et on verrouille la commande manuelle (M),
- au point mort (N), en déplaçant l'élément de commutation à partir de la position stable (3) dans la position de fin de course avant (10), on sélectionne la marche-arrière (R) et dans la position de fin de course arrière (11) la marche-avant (D) et on verrouille le mode manuel (M),
- dans le mode de marche-avant (D), en déplaçant l'élément de commutation à partir de la position stable (3) dans la position neutre avant (8), on sélectionne le point mort et en débattant dans la position de fin de course avant (10), on sélectionne la marche-arrière (R) et en débattant l'élément de commutation à partir de la position stable (3) dans la direction longitudinale du premier couloir de commutation (5), on sélectionne le mode manuel (M) et en débattant de nouveau l'élément de commutation à partir de la position stable (3) dans la direction longitudinale du premier couloir de commutation (5), on commute manuellement les différents rapports de marche-avant.

16. Sélecteur selon l'une des revendications 1 à 15,
**caractérisé en ce que**
les couloirs de commutation (5, 7) sont pratiquement parallèles.

17. Sélecteur selon l'une des revendications 1 à 16,
**caractérisé en ce que**
l'élément de commutation est un élément de commutation électrique relié électriquement à l'électronique de la boîte de vitesses pour commander les actionneurs de la boîte de vitesses.

18. Sélecteur selon l'une des revendications 1 à 17,
**caractérisé par**
- une installation d'affichage (1) comportant un schéma de commutation (2) qui donne les positions de débattement possibles (9-11, 14, M-, M+) de l'élément de commutation à partir de la position stable (3), et
- les positions de débattement sont indiquées pour sélectionner les différentes positions de fonctionnement que l'on peut sélectionner actuellement par des symboles (R, N, D, M) associés,
- et à partir de l'état de fonctionnement actuel, seuls sont indiqués les états de fonctionnement qui peuvent être sélectionnés alors à partir de l'état de fonctionnement actuel par le débattement de l'élément de commutation.

19. Sélecteur selon la revendication 18,
**caractérisé en ce que**
l'état de fonctionnement actuel est mis en relief optiquement dans le schéma de commutation des états de fonctionnement qu'il est possible de sélectionner actuellement.

20. Sélecteur selon l'une des revendications 18 ou 19,
**caractérisé en ce qu'**
en mode de marche-avant (D) et en mode manuel (M), au moins un élément d'affichage (M-, M+) est visible qui, en mode de marche-avant (D), indique l'option de sélection du mode manuel (M).

21. Sélecteur selon l'une des revendications 10 à 20,
**caractérisé par**
au moins un élément d'affichage (S/D, M) indiquant que le second mode automatique ou le mode manuel est activé.

22. Sélecteur selon l'une des revendications 18 à 21,
**caractérisé en ce que**
le schéma de commutation (2) comporte un marquage lumineux (3) qui indique la position stable de l'élément de commutation, ce marquage (3) s'éteignant lorsque l'élément de commutation a quitté sa position stable.

23. Sélecteur selon l'une des revendications 18 à 21,
**caractérisé en ce que**
le schéma de commutation (2) comporte un marquage lumineux (3) qui indique la position actuelle de l'élément de commutation et cela même pendant le mouvement de l'élément de commutation à partir de sa position stable dans l'une des positions de débattement possible.

24. Sélecteur selon l'une des revendications 1 à 23,
**caractérisé en ce qu'**
en mode manuel (M), il est prévu une boucle de commutation limite ou qui peut être sélectionnée et qui est limitée par la bouche de commutation limite, limitant le nombre de rapports de marche-avant qui peuvent se sélectionner manuellement sur une partie des rapports de marche-avant disponibles en fait.
